# FASCICULE DE BREVET EUROPEEN

(11) **EP 2 315 628 B1**
(45) Date de publication et mention de la délivrance du brevet: **10.10.2012**
(21) Numéro de dépôt: 09737015.9
(22) Date de dépôt: 13.08.2009
(51) Int. Cl.: B01J 13/04

(54) **PROCEDE DE PREPARATION D'UN MATERIAU COEUR-COUCHE AYANT UNE BONNE RESISTANCE MECANIQUE**
VERFAHREN ZUR HERSTELLUNG EINES KERN-SCHALE-MATERIALS MIT GUTER MECHANISCHER FESTIGKEIT
METHOD OF PREPARING A CORE/SHELL MATERIAL HAVING GOOD MECHANICAL STRENGTH

(30) Priorité: 19.08.2008 FR 0804639
(43) Date de publication de la demande: 04.05.2011
(73) Titulaire: IFP Energies nouvelles, 92852 Rueil-Malmaison Cedex (FR)
(72) Inventeur: OULD-CHIKH, Samy, F-69160 Tassin la Demi Lune (FR); FECANT, Antoine, F-69530 Brignais (FR); ROULEAU, Loïc, F-69390 Charly (FR); FISCHER, Lars, F-38200 Vienne (FR); HEMATI, Mehrdji, F-31860 Pins-Justaret (FR)
(86) Numéro de dépôt international: PCT/FR2009/001007
(87) Numéro de publication internationale: WO 2010/020717

(56) Documents cités:
- WO-A-02/41990
- WO-A-2008/060968
- US-A1- 2004 077 911
- US-A1- 2005 284 799
- US-A1- 2008 161 181
- OULD-CHIKH E.A.: "Methodology of mechanical characterization of coated spherical materials" POWDER TECHNOLOGY, vol. 190, no. 1-2, 2 mai 2008 (2008-05-02) , pages 19-24, XP002531436

## Description

### DOMAINE TECHNIQUE

La présente invention se rapporte au domaine des matériaux comprenant un coeur enrobé par au moins une couche externe continue et homogène. Plus précisément, elle se rapporte à un nouveau procédé de préparation d'un matériau coeur-couche en vue de l'utilisation dudit matériau en tant que supports de catalyseur dans des réactions d'hydrogénation sélective.

### ART ANTERIEUR

Les matériaux coeur-couche sont largement décrits pour la catalyse et/ou l'adsorption. Ces matériaux sont par exemple constitués d'une couche contenant une phase catalytiquement active et d'un coeur catalytiquement inactif, et permettent notamment un gain significatif de sélectivité dans les réactions nécessitant un fort transfert de matière et/ou de chaleur. Les matériaux coeur inerte-couche catalytiquement active sont par exemple décrits dans les réactions de déshydrogénation de coupes paraffiniques (US 6.177.381, US 6.486.370), d'hydroisomérisation de coupes paraffiniques (EP 0.542.528, US 5.200.382), d'alkylation aliphatique de coupes essences (WO 98/14274), d'hydrodésulfuration de naphta contenant des oléfines (WO 2006/009773), d'hydrodésulfuration, d'hydrodéazotation ou d'hydrodémétallation d'hydrocarbures (US 4.255.253), d'alkylation de coupes aromatiques (US 4283583, US 6376730), d'isomérisation de coupes aromatiques (US 7.297.830), d'hydrogénation sélective d'hydrocarbures insaturés (US 6.992.040, US 2003/0036476), d'oxydation d'acroléine en acide acétique (US 5.677.261), de production de carboxylate d'alkenyl (acétate de vinyl) à partir d'acide carboxylique (acide acétique), d'oléfine (éthylène) et d'oxygène (air) (WO 2007/008288), d'oxychlorination d'oléfines ou d'aromatiques (US 4.460.699), de réduction d'oxyde d'azote (US 4585632), d'oxydation d'hydrogène en eau (WO 2004/035201), de production d'hydrocarbures à partir de gaz de synthèse (US 7.087.191, US 2005/0245621).

Ces matériaux sont préparés par mise en contact d'éléments de la couche avec un support jouant le rôle de coeur. Le coeur peut être inerte et correspondre par exemple à un support en oxyde réfractaire telles que la cordiérite ou l'alumine alpha. Le coeur peut être catalytiquement actif et correspondre par exemple à un catalyseur constitué d'une phase active dispersée dans une matrice en alumine poreuse. Le coeur peut être adsorbant.

Les éléments de la couche sont destinés à former la couche et peuvent être totalement mis en suspension aqueuse (US 6.177.381) puis mis en contact avec le coeur. Ils peuvent être partiellement mis en suspension et partiellement mis sous forme de poudre (US 5.677.261) puis mis en contact avec le coeur. Des additifs sont parfois ajoutés pour favoriser certaines caractéristiques, par exemple le mouillage de la périphérie externe du coeur par la suspension ou la tenue mécanique de la couche. Des additifs organiques de type alcool polyvinylique, glycérol ou des dérivés cellulosiques sont par exemple ajoutés à la suspension pour favoriser la mouillabilité de celle-ci sur la surface externe du coeur et la résistance à l'attrition des matériaux coeur-couche obtenus (US 6.486.370). Des fibres généralement inorganiques peuvent également être ajoutées aux éléments pour améliorer la résistance à l'impact (WO 2007/008288). Les couches catalytiquement actives sont comparables au catalyseurs classiques et sont par exemple formées de phase métallique et/ou zéolithique dispersée dans une matrice d'alumine poreuse. Elles sont par exemple obtenues à partir d'une suspension des éléments de la couche comprenant un sol d'alumine jouant le rôle de liant, de sels métalliques dissous destinés à former une phase catalytiquement active, d'oxyde d'alumine supportant éventuellement une phase métallique catalytiquement active ou de zéolithe. D'autres phases métalliques peuvent être apportées après l'étape de mise en contact.

La mise en contact des éléments de la couche avec les éléments constituant le coeur du matériau est réalisée par exemple par immersion du coeur dans un liquide contenant les éléments de la couche (US 4.460.699), par pulvérisation d'un liquide, contenant les éléments de la couche, sur le coeur ou par pulvérisation d'un liquide et introduction de solide, comprenant les éléments de la couche, sur le coeur, en étape simultanée ou en étape consécutive.
Le document WO 02/41990 A1 décrit un procédé de préparation d'une composition stratifiée comprenant un coeur constitué d'une alumine alpha enrobé par une couche constituée d'une alumine gamma. Ce document décrit aussi un procédé de préparation d'un catalyseur utilisant cette composition stratifiée et un procédé d'hydrogénation utilisant ce catalyseur.
Pour être largement mis en oeuvre dans les procédés industriels, ces matériaux doivent être obtenus par une technologie simple de dépôt de la couche et un nombre d'étapes réduit. On recherche également à obtenir un matériau présentant une couche continue et homogène, sans défauts de type cavité, craquelure ou fissure, fortement cohésive et fortement adhérée à la surface du coeur de manière à résister aux fortes sollicitations de compression et d'attrition rencontrées dans la majorité des applications industrielles.

### OBJET ET INTERÊT DE L'INVENTION

La présente invention porte sur un nouveau procédé de préparation d'un matériau sphérique comprenant au moins un coeur poreux enrobé par au moins une couche poreuse continue et homogène, le taux d'attrition dudit matériau, mesuré par la méthode Spence, étant inférieur à 20%, ledit procédé de préparation comprenant au moins les étapes suivantes :
a) la mise en contact d'au moins un lit de particules sphériques constituant le coeur dudit matériau avec au moins une suspension contenant au moins un liant inorganique de manière à former un solide ayant une pré-couche autour dudit coeur,
b) la mise en contact sous flux d'air chaud du solide issu de ladite étape a) avec au moins une poudre constituée de particules sphériques d'au moins un oxyde inorganique et au moins une suspension contenant au moins un liant inorganique et au moins un liant organique de manière à former un solide dont le coeur est enrobé par au moins une couche poreuse continue et homogène, le rapport (masse de liant inorganique anhydre/volume de particules de poudre) étant compris entre 0,05 et 1 g.ml⁻¹,
c) le séchage du solide issu de ladite étape b),
d) la calcination du solide issu de ladite étape c).

Le matériau obtenu par la mise en oeuvre de ce nouveau procédé de préparation présente une excellente résistance à l'attrition témoignant de sa très bonne résistance mécanique. Il résiste aux sollicitations de compression et de cisaillement rencontrées dans la majorité des applications industrielles. De manière surprenante, ledit matériau coeur-couche préparé selon le procédé de l'invention est plus résistant à la compression ou à l'attrition que ceux préparés selon les procédés de préparation de l'art antérieur, notamment ceux mettant en oeuvre un prémouillage, un additif organique, une mise en contact en lit fluidisé.
Par ailleurs, ledit matériau obtenu par la mise en oeuvre de ce nouveau procédé de préparation présente une couche continue et homogène, avec peu voire sans défauts de type cavité, craquelure, fissure. Ladite couche est fortement cohésive et fortement adhérée à la surface du coeur dudit matériau. La formation préalable d'une précouche autour du coeur conduit à une très bonne accroche des particules de la poudre constituant la couche sur le coeur du matériau. De plus, un autre avantage du procédé de préparation du matériau coeur-couche selon l'invention est qu'il met en oeuvre une technologie simple de dépôt de la couche et est donc très économique.

La présente invention porte également sur la préparation d'un catalyseur utilisant le matériau coeur-couche préparé selon le procédé de l'invention en tant que support de catalyseur. Au moins un métal du groupe VIII et éventuellement au moins un métal additionnel du groupe IB est(sont) imprégné(s) dans la porosité de la couche du matériau coeur-couche. Le catalyseur ainsi obtenu est mis en oeuvre dans un procédé d'hydrogénation sélective de composés polyinsaturés présents dans des coupes hydrocarbonées. Le catalyseur comprenant le matériau coeur-couche préparé selon le procédé de l'invention conduit à de meilleures performances catalytiques en hydrogénation sélective des composés polyinsaturés, notamment en terme d'activité, qu'un catalyseur comprenant un matériau coeur-couche peu résistant à l'attrition et qu'un catalyseur comprenant un matériau coeur-couche dans lequel la couche est discontinue et peu homogène.

### DESCRIPTION DE L'INVENTION

La présente invention a pour objet un procédé de préparation d'un matériau sphérique comprenant au moins un coeur poreux enrobé par au moins une couche poreuse continue et homogène, le taux d'attrition dudit matériau, mesuré par la méthode Spence, étant inférieur à 20%, ledit procédé de préparation comprenant au moins les étapes suivantes :
a) la mise en contact d'au moins un lit de particules sphériques constituant le coeur dudit matériau avec au moins une suspension contenant au moins un liant inorganique de manière à former un solide ayant une pré-couche autour dudit coeur,
b) la mise en contact sous flux d'air chaud du solide issu de ladite étape a) avec au moins une poudre constituée de particules sphériques d'au moins un oxyde inorganique et au moins une suspension contenant au moins un liant inorganique et au moins un liant organique de manière à former un solide dont le coeur est enrobé par au moins une couche poreuse continue et homogène, le rapport (masse de liant inorganique anhydre/volume de particules de poudre) étant compris entre 0,05 et 1 g.ml⁻¹,
c) le séchage du solide issu de ladite étape b),
d) la calcination du solide issu de ladite étape c).

Le coeur poreux présent dans le matériau sphérique préparé selon le procédé de l'invention est constitué de particules de forme sphérique lesquelles présentent une distribution de taille étroite. La taille moyenne ou diamètre moyen de la distribution est comprise entre 0,1 et 10 mm, préférentiellement entre 0,3 et 7 mm et encore plus préférentiellement entre 0,5 et 5 mm. Le plus petit diamètre de la distribution est supérieur à 0,5 fois le diamètre moyen, préférentiellement supérieur à 0,8 fois le diamètre moyen et encore plus préférentiellement supérieur à 0,9 fois le diamètre moyen. Le plus grand diamètre de la distribution est inférieur à 2 fois le diamètre moyen, préférentiellement inférieur à 1,2 fois le diamètre moyen et encore plus préférentiellement inférieur à 1,1 fois le diamètre moyen. Le diamètre des particules constituant le coeur est déterminé préférentiellement par microscopie optique ou par microscopie électronique à balayage. Le coeur poreux est avantageusement inerte vis-à-vis de l'adsorption ou de la catalyse, c'est-à-dire qu'il ne présente pas de réelle performance en adsorption ou en catalyse. Il est par exemple constitué d'alumine, de zircone, de silice, d'oxyde de titane, de cordiérite ou d'un mélange de ces composés. Le coeur poreux peut aussi être constitué d'une zéolithe, d'un tamis moléculaire ou d'un mélange de ces composés et ainsi assurer une fonction d'adsorbant. Le coeur poreux peut aussi être formé d'une phase métallique et/ou zéolithique dispersée dans une matrice en alumine et ainsi être catalytiquement actif. De manière préférée, le coeur du matériau préparé selon le procédé de l'invention est inerte vis-à-vis de l'adsorption ou de la catalyse et est très préférentiellement constitué d'alumine.
La surface spécifique, le volume poreux total et la distribution de taille des pores du coeur poreux constitué de particules sphériques peuvent être très variables en fonction de la nature chimique des particules constituant ledit coeur. La surface spécifique est mesurée par physisorption à l'azote. Le volume poreux total et la distribution de taille des pores sont mesurés par porosimétrie au mercure. Pour un coeur inerte, par exemple en alumine, la surface spécifique est inférieure à 50 m²/g, préférentiellement inférieure à 30 m²/g et encore plus préférentiellement inférieure à 20 m²/g. La taille moyenne des pores est supérieure à 50 nm, préférentiellement supérieure à 85 nm et encore plus préférentiellement supérieure 125 nm. Le volume poreux total est compris entre 0,1 et 1 ml/g.

La couche poreuse qui enrobe le coeur dudit matériau préparé selon le procédé de l'invention est continue, c'est-à-dire non fragmentée ou non segmentée, et homogène, c'est-à-dire qu'elle présente une composition chimique proche préférentiellement identique d'un endroit à un autre de la couche ainsi qu'une épaisseur proche préférentiellement identique d'un endroit à l'autre de la couche. Les écarts d'épaisseur d'un endroit à un autre de la couche sont inférieurs à 20 % de la valeur moyenne de l'épaisseur, préférentiellement inférieurs à 15 % de la valeur moyenne de l'épaisseur et encore plus préférentiellement inférieurs à 10 % de la valeur moyenne de l'épaisseur. La valeur moyenne de l'épaisseur de la couche est comprise entre 0,005 et 1 mm, préférentiellement entre 0,007 et 0,7 mm et encore plus préférentiellement entre 0,01 et 0,5 mm. L'épaisseur de la couche est mesurée par microscopie électronique à balayage sur une section polie du matériau. Les écarts de teneurs en éléments chimiques présents dans la couche, d'un endroit à l'autre de ladite couche, peuvent être détectés dans le cas d'une couche contenant plusieurs éléments, notamment pour une couche constituée d'une phase catalytiquement active dans une matrice inorganique poreuse. Ces écarts de teneurs en éléments chimique sont inférieurs à 20 % de la valeur moyenne, préférentiellement inférieurs à 15 % de la valeur moyenne et encore plus préférentiellement inférieurs à 10 % de la valeur moyenne. La teneur en éléments chimiques de la couche est mesurée sur une section polie du matériau préparé selon le procédé de l'invention par microanalyse X (EDX) couplée à un microscope électronique à balayage (MEB) ou par microsonde de Castaing (EPMA).

La couche poreuse est avantageusement inerte vis-à-vis de l'adsorption ou de la catalyse, c'est-à-dire qu'elle ne présente pas de réelle performance en adsorption ou en catalyse. Elle est par exemple constituée d'alumine, de zircone, de silice, d'oxyde de titane ou d'un mélange de ces composés, préférentiellement d'alumine. Ladite couche poreuse peut aussi être constituée d'une zéolithe, d'un tamis moléculaire ou d'un mélange de ces composés et ainsi assurer une fonction d'adsorbant. Ladite couche poreuse peut aussi être formée d'une phase métallique et/ou zéolithique dispersée dans une matrice en alumine et ainsi être catalytiquement active.

Ladite couche poreuse peut aussi être formée d'un matériau avec des pores de taille calibrée correspondant à une membrane. Par exemple, il peut s'agir d'alumine, de zircone, de silice, d'oxyde de titane, de zéolithe, de tamis moléculaire ou d'un mélange de ces composés. De manière préférée, ladite couche poreuse est inerte vis-à-vis de l'adsorption ou de la catalyse et est très préférentiellement constituée d'alumine. Conformément à l'invention, lorsque le coeur et la couche sont constitués d'alumine, l'alumine constituant les particules du coeur se présente sous une phase différente de celle de la couche, par exemple le coeur est constitué d'une alumine alpha et la couche est constituée d'une alumine gamma.

Ladite couche poreuse est fortement cohésive, c'est-à-dire qu'elle est formée de particules ayant une forte cohésion entre elles, et elle est fortement adhérée au coeur dudit matériau préparé selon le procédé de l'invention. La résistance de cohésion et d'adhésion dudit matériau coeur-couche préparé selon le procédé de l'invention est mesurée par un test d'attrition selon la méthode Spence (J.F. Le Page, Catalyse de contact : conception, préparation et mise en oeuvre des catalyseurs industriels, Technip, 1978, page 225). Le test d'attrition mis en oeuvre pour déterminer le taux d'attrition du matériau préparé selon le procédé de l'invention est réalisé de la manière suivante : 25 g de matériau préparé selon le procédé de l'invention sont mis en rotation dans un tube en inox de 36 mm de diamètre et 305 mm de longueur. Le tube tourne autour d'un axe perpendiculaire à 25 tr/min pendant 1 h. Le produit est récupéré et tamisé avec un tamis normalisé NFX-11-504/ISO-3310-2 dont le diamètre d'ouverture est fonction du diamètre du matériau. En particulier, dans le cadre de la présente invention, on choisit un tamis ayant un diamètre d'ouverture de maille correspondant au deux tiers du diamètre moyen du matériau préparé selon le procédé de l'invention et plus préférentiellement on choisit un tamis ayant un diamètre d'ouverture de 1 mm. Le tamisage permet de mesurer la masse de fines produites au cours de la rotation. La résistance à l'attrition du matériau préparé selon le procédé de l'invention est évaluée par le taux d'attrition qui est calculé par le rapport (masse de fines produites au cours de la rotation)/(masse de couche du matériau introduit dans le test)x100. De manière surprenante, le taux d'attrition du matériau préparé selon le procédé de la présente invention est faible : il est inférieur à 20 %, préférentiellement inférieur à 10 % et encore plus préférentiellement inférieur à 5 %. Un taux d'attrition faible tel que celui présenté par le matériau préparé par le procédé de la présente invention est avantageux car il témoigne de la bonne résistance mécanique dudit matériau.

Conformément à l'étape a) du procédé de préparation du matériau selon l'invention, une suspension contenant au moins un liant inorganique et éventuellement au moins un liant organique introduit(s) dans un solvant est mise en contact avec au moins un lit de particules sphériques constituant le coeur dudit matériau. Le liant inorganique peut être un sel, un alcoxyde, un hydroxyde, un oxyhydroxyde ou un oxyde qui est soluble ou dispersible dans le solvant. Il s'agit par exemple d'un sol d'alumine, d'un sol de zircone, d'un sol de silice, d'un sol d'oxyde de titane ou d'un mélange de ces sols. Ledit liant inorganique conduit à une résistance à la rupture accrue de l'interface couche-coeur dudit matériau obtenu à l'issue de ladite étape d) du procédé de préparation selon l'invention. Le liant organique, préférentiellement présent dans la suspension mise en contact avec au moins un lit de particules sphériques constituant le coeur dudit matériau, peut être un composé qui est soluble ou dispersible dans le solvant et qui se décompose après calcination selon ladite étape d). Il s'agit par exemple d'alcool polyvynilique, de glycérol, ou de dérivé cellulosique (méthylcellulose, carboxyméthylcellulose, hydroxycellulose, hydropropylméthylcellulose). Il permet de limiter les défauts de type craquelure ou fissure qui peuvent se former au cours de l'étape c) dans la pré-couche et permet ainsi d'accroître la résistance à l'attrition du matériau après l'étape d). Le solvant peut être l'eau ou un composé organique de faible poids moléculaire, contenant moins de 6 atomes de carbone par molécule et choisi parmi un alcool, une cétone, un ester, un éther ou un mélange de ces composés, et préférentiellement l'eau, l'éthanol ou l'acétone ou un mélange de ces composés et encore plus préférentiellement l'eau. Ladite étape a) conduit à la formation d'une pré-couche autour de chacune des particules sphériques constituant le coeur du matériau préparé selon le procédé de l'invention. Le dépôt de cette pré-couche autour de chacune des particules constituant le coeur dudit matériau est préférentiellement opéré en l'absence de tout débit d'air. Ainsi, à l'issue de ladite étape a), la pré-couche est non séchée et reste humide favorisant une meilleure accroche des particules de la poudre constituant la couche sur le coeur du matériau. La pré-couche est formée de manière à recouvrir la surface externe de chacune des particules constituant le coeur dudit matériau sur une épaisseur définie et à remplir les bouches de pores desdites particules sur une profondeur définie. L'épaisseur de la pré-couche sur la surface externe du coeur est comprise entre 0,1 et 10 µm, préférentiellement entre 0,3 et 5 µm, et encore plus préférentiellement entre 0,5 et 3 µm. La profondeur de la pré-couche dans les bouches de pores du coeur poreux constitué de particules sphériques est comprise entre 0,3 et 30 µm, préférentiellement entre 1 et 15 µm, et encore plus préférentiellement entre 1,5 et 10 µm. La présence de défauts, l'évaluation de l'épaisseur et la profondeur de la pré-couche sont déterminées par microscopie électronique à balayage sur une section polie du solide issu de ladite étape d) et préférentiellement sans mise en oeuvre de ladite étape b). Conformément à ladite étape a) du procédé de préparation du matériau selon l'invention, la proportion de liant inorganique est définie de manière à satisfaire l'épaisseur et la profondeur de la pré-couche. Le rapport (masse de liant inorganique anhydre)/(masse de coeur)x100 est compris entre 0,1 et 10 %, préferentiellement entre 0,2 et 5 % et encore plus préférentiellement entre 0,3 et 3 %. La proportion du liant organique, lorsqu'il est présent, est définie de manière à ce que le rapport (masse de liant organique)/(masse de liant inorganique anhydre)x100 soit compris entre 0,5 et 10 %, préférentiellement entre 0,7 et 7 %, et encore plus préférentiellement entre 0,5 et 5 %. La concentration massique en liant inorganique dans le solvant est définie de manière à ce que le rapport (masse de liant inorganique anhydre)/(masse de liant inorganique anhydre + masse de solvant)x100 soit compris entre 0,2 et 20 %, préférentiellement entre 0,4 et 10 % et encore plus préférentiellement entre 0,6 et 6 %. Le dépôt de la pré-couche est réalisé par toute technique connues de l'Homme du métier, avantageusement par une technique simple, notamment par pulvérisation de la suspension sur un lit de particules sphériques constituant le coeur dudit matériau contenu dans un plateau tournant incliné ou dans un tambour tournant et fonctionnant selon un mouvement de type cascade (P.J. Sherrington, R. Oliver, Granulation, Heyden, 1981, p 62). La pulvérisation de la suspension peut être continue ou discontinue. Les conditions de dépôt de la pré-couche, notamment le débit moyen de pulvérisation et la concentration en liant inorganique de la suspension, sont choisis de manière à conserver un mouvement de type cascade tout au long de l'étape a) et assurer la formation de la pré-couche sur une profondeur dans les bouches de pores et sur une épaisseur sur la surface externe des particules constituant le coeur conformément à ce qui a été décrit ci-dessus, sans défaut de type fissure ou craquelure.

Conformément à l'étape b) du procédé de préparation du matériau selon l'invention, au moins une poudre constituée de particules sphériques d'au moins un oxyde inorganique et au moins une suspension contenant au moins un liant inorganique et au moins un liant organique, introduits dans un solvant, sont déposées sur la surface externe de la pré-couche formée autour de chacune des particules du coeur selon ladite étape a) pour former une couche continue et homogène. Les particules de la poudre présentent une forme sphérique et une distribution de taille calibrée qui dépend de l'épaisseur de la couche. La forme desdites particules est analysée par microscopie électronique à balayage. La distribution de taille desdites particules est mesurée par granulométrie à diffraction laser, basée sur la théorie de la diffraction de Mie (G. B. J. de Boer, C. de Weerd, D. Thoenes, H. W. J. Goossens, Part. Charact. 4 (1987) 14-19). La distribution de la granulométrie des particules de la poudre est représentée par la dimension Dv,X, définie comme étant le diamètre de la sphère équivalente telle que X % en volume des particules a une taille inférieure audit diamètre. Plus précisément, la distribution de la granulométrie desdites particules est représentée par les trois dimensions Dv10, Dv50 et Dv90. Le diamètre médian Dv50 est inférieur ou égal à 0,2 fois l'épaisseur de la couche enrobant le coeur dudit matériau préparé selon le procédé de l'invention, l'épaisseur de ladite couche étant mesurée après l'étape d) du procédé selon l'invention, préférentiellement inférieur ou égal à 0,15 fois l'épaisseur de la couche mesurée après ladite étape d) et encore plus préférentiellement inférieur ou égal à 0,1 fois l'épaisseur de la couche mesurée après ladite étape d). Le diamètre Dv10 est supérieur ou égal à 0,1 fois le diamètre médian Dv50 et préférentiellement supérieur ou égal à 0,2 fois le diamètre médian Dv50 et encore plus préférentiellement supérieur ou égal à 0,5 fois le diamètre médian Dv50. Le diamètre Dv90 est inférieur ou égal à 10 fois le diamètre médian et préférentiellement inférieur ou égal à 5 fois le diamètre médian et encore plus préférentiellement inférieur ou égal à 2 fois le diamètre médian. L'oxyde inorganique constituant les particules sphériques de ladite poudre est particulièrement choisi parmi l'alumine, la zircone, la silice, l'oxyde de titane et un mélange d'au moins de ces oxydes.
Le liant inorganique présent dans la suspension utilisée pour la mise en oeuvre de ladite étape b) du procédé de préparation du matériau selon l'invention peut être un sel, un alcoxyde, un hydroxyde, un oxyhydroxyde ou un oxyde soluble ou dispersible dans le solvant employé dans la suspension. Il s'agit par exemple d'un sol d'alumine, d'un sol de zircone, d'un sol de silice, d'un sol d'oxyde de titane ou d'un mélange de ces sols. Ledit liant inorganique conduit à une solidification de ladite couche enrobant le coeur du matériau préparé selon le procédé de l'invention.
Le liant organique présent dans la suspension utilisé pour la mise en oeuvre de ladite étape b) du procédé de préparation selon l'invention peut être un composé soluble ou dispersible dans le solvant employé dans la suspension. Il se décompose après l'étape de calcination selon l'étape d) du procédé de préparation de l'invention. Il limite les défauts de type craquelure ou fissure formés au cours de l'étape c) de séchage dans la couche et accroît ainsi la résistance à l'attrition du matériau préparé selon le procédé de l'invention. Il s'agit par exemple d'un alcool polyvynilique, de glycérol, ou d'un dérivé cellulosique (méthylcellulose, carboxyméthylcellulose, hydroxycellulose, hydropropylméthylcellulose). Le solvant peut être l'eau ou un composé organique de faible poids moléculaire, contenant moins de 6 atomes de carbone par molécule, et choisi parmi un alcool, une cétone, un ester, un éther ou un mélange de ces composés, et préférentiellement l'eau, l'éthanol ou l'acétone ou un mélange de ces composés et encore plus préférentiellement l'eau. La couche est formée de manière à recouvrir de façon continue et homogène la surface externe de la pré-couche.
La proportion de particules constituant la poudre introduites pour la mise en oeuvre de ladite étape b) du procédé de préparation du matériau selon l'invention est choisie de manière à obtenir une épaisseur de la couche telle que définie ci-dessus dans la présente description, à savoir une épaisseur comprise entre 0,005 et 1 mm, préférentiellement entre 0,007 et 0,7 mm et encore plus préférentiellement entre 0,01 et 0,5 mm. La présence de défauts et l'évaluation de l'épaisseur de la couche sont déterminées par microscopie électronique à balayage sur une section polie du matériau obtenu à la suite de ladite étape d) du procédé de préparation selon l'invention. Le rapport (masse de particules de poudre)/(masse de particules de coeur)x100 est compris entre 1 et 100 %, préférentiellement entre 5 % et 50 % et encore plus préférentiellement entre 3 et 30 %. La proportion de liant inorganique est optimale lorsque les particules de la poudre présente dans la couche sont proches préférentiellement jointives et lorsque les vides interparticulaires créés entre les particules de poudre sont remplis par ledit liant inorganique, sans porosité résiduelle et sans défaut de type craquelure ou fissure ou segmentation de la couche après l'étape d). Ce point optimal est déterminé par microscopie électronique à balayage sur une section polie du matériau obtenu à la suite de ladite étape d). Il peut également être déterminé par le test d'attrition du matériau obtenu à la suite de ladite étape d) et correspond à une résistance à l'attrition maximale. Le rapport (masse de liant inorganique anhydre)/(volume de particules de poudre) est compris entre 0,05 et 1 g/ml, préférentiellement entre 0,1 et 0,5 g/ml et encore plus préférentiellement entre 0,15 et 0,35 g/ml. La proportion du liant organique dans la suspension est définie de manière à ce que le rapport (masse de liant organique)/(masse de liant inorganique anhydre)x100 soit compris entre 0,5 et 10 %, préférentiellement entre 0,5 et 7 %, et encore plus préférentiellement entre 0,7 et 5 %. La concentration massique en liant inorganique dans le solvant employé dans le suspension est définie de manière à ce que le rapport (masse de liant inorganique anhydre)/(masse de liant inorganique anhydre + masse de solvant)x100 soit compris entre 0,2 et 20 %, préférentiellement entre 0,4 et 10 % et encore plus préférentiellement entre 0,6 et 6 %. Le dépôt de la couche enrobant le coeur est réalisé par toute technique connue de l'Homme du métier, avantageusement par une technique simple, notamment par pulvérisation, sous flux d'air chaud, de la suspension sur les particules de solide issu de ladite étape a) contenues dans un plateau tournant incliné ou dans un tambour tournant et fonctionnant selon un mouvement de type cascade. Le flux d'air chaud peut être continu pendant la durée de la pulvérisation ou intermittent. La pulvérisation de la suspension et l'introduction des particules de poudre peuvent être continues ou discontinues. Les conditions de dépôt, notamment le débit moyen des particules de poudre, le débit moyen de pulvérisation, la concentration en liant inorganique de la suspension, la température d'air chaud sont définis de manière à conserver un mouvement de type cascade tout au long de l'étape b) et assurer la formation de la couche continue, d'épaisseur et de composition homogène sur la surface externe de la pré-couche, sans défaut de type fissure et craquelure. La température du flux d'air chaud est comprise entre 50 et 200°C, préférentiellement entre 60 et 150°C.

Conformément à l'étape c) du procédé de préparation du matériau selon l'invention, le séchage est opéré par les techniques connues de l'Homme du métier, pour évaporer de manière contrôlée le solvant, et limiter les défauts de type craquelure, fissure ou segmentation de la couche et conférer à ladite couche une première solidification. Le séchage est notamment réalisé à une température comprise entre 25 et 200°C, préférentiellement entre 30 et 150°C pendant une durée comprise entre 1 h à 80 h, préférentiellement entre 2 et 12 h. Il est effectué sous vide, sous air ambiant ou sous air humide, avec une teneur en vapeur d'eau de 10 à 100 % volume. De manière très préférée, le séchage est réalisé à une température comprise entre 30 et 150°C pendant une durée de 2 à 12 h sous air ambiant.

Conformément à l'étape d) du procédé de préparation du matériau selon l'invention, la calcination est opérée par les technique connues de l'Homme du métier pour décomposer les produits organiques introduits, révéler la porosité du matériau, calibrer la taille des pores de la couche formée et conférer à la couche la solidification finale. La calcination est notamment opérée à une température comprise entre 400 et 1000°C, préférentiellement entre 450°C et 800°C, pendant une durée de 1 h à 12 h, sous air ambiant ou air humide avec une concentration en vapeur d'eau de 0 à 80 %. Plus préférentiellement, la calcination est opérée à une température comprise entre 450°C et 800°C sous air ambiant.

L'enchaînement des étapes a), b), c) et d) décrites ci-dessus peut être réalisé une unique fois ou de multiple fois avec les mêmes précurseurs de couche pour obtenir une unique couche continue et homogène. Cet enchaînement peut être réalisé de multiple fois avec des précurseurs différents pour obtenir plusieurs couches continues et homogènes. Cet enchaînement est préférentiellement réalisé une unique fois ou de multiples fois avec les mêmes précurseurs et encore plus préférentiellement une unique fois.

La présente invention a également pour objet un procédé de préparation d'un catalyseur à partir d'un matériau préparé selon le procédé décrit ci-dessus dans la présente description. A la suite de la préparation du matériau coeur-couche selon le procédé de l'invention décrit ci-dessus, une phase catalytiquement active est introduite dans la porosité de la couche enrobant le coeur dudit matériau lequel joue alors le rôle de support de catalyseur, par les techniques d'imprégnation connues de l'Homme du métier. La phase catalytiquement active comprend au moins un métal du groupe VIII de la classification périodique des éléments et avantageusement au moins un métal additionnel du groupe IB. Ledit métal du groupe VIII est préférentiellement choisi parmi le nickel, le palladium et le platine et le mélange d'au moins deux de ces métaux, de préférence ledit métal du groupe VIII est le palladium. Ledit métal du groupe IB est choisi parmi le cuivre, l'argent et l'or. La teneur pondérale en métal du groupe VIII du catalyseur préparé à partir du matériau préparé selon le procédé de l'invention décrit ci-dessus dans la présente description est comprise entre 0,01 et 20 % poids. En particulier, lorsque ledit métal du groupe VIII est le palladium, sa teneur pondérale est comprise entre 0,05 et 2% poids. Lorsqu'il est présent, la teneur pondérale en métal du groupe IB du catalyseur préparé à partir du matériau préparé selon le procédé de l'invention décrit ci-dessus dans la présente description est comprise entre 0,01 et 2 % poids. Le catalyseur obtenu se présente sous forme de billes.

Plus précisément, le procédé de préparation du catalyseur selon l'invention comprend les étapes suivantes :
e) l'imprégnation du matériau issu de ladite étape d) par au moins une solution d'au moins un précurseur d'au moins un métal du groupe VIII,
f) le séchage du solide issu de ladite étape e),
g) la calcination du solide issu de ladite étape f), et
h) la réduction du catalyseur issu de ladite g).

Selon ladite étape e) du procédé de préparation du catalyseur selon l'invention, l'imprégnation du matériau coeur-couche issu de ladite étape d) du procédé de préparation selon l'invention décrit ci-dessus dans la présente description peut être réalisée par imprégnation à sec, par imprégnation en excès ou en défaut, en mode statique ou dynamique. De manière préférée, il s'agit d'une imprégnation à sec réalisée dans un drageoir. L'imprégnation peut être réalisée en une ou plusieurs imprégnations successives. Ladite étape e) est réalisée à une température comprise entre 5°C et 40°C et de manière préférée entre 15°C et 35°C.

La concentration de la solution d'au moins un précurseur d'au moins un métal du groupe VIII, de préférence d'un précurseur du palladium, est ajustée selon la teneur massique en métal du groupe VIII voulue sur le catalyseur. De manière préférée, ladite solution est une solution aqueuse et le sel précurseur dudit métal du groupe VIII est généralement choisi dans groupe constitué par les chlorures, les nitrates et les sulfates d'ions métalliques. Lorsque de manière préférée, le métal est le palladium, le sel précurseur de palladium est avantageusement le nitrate de palladium.

Selon ladite étape f) du procédé de préparation du catalyseur selon l'invention, on procède au séchage du solide issu de ladite étape e) afin d'éliminer toute ou une partie de l'eau introduite lors de l'imprégnation d'au moins un métal du groupe VIII. Le séchage est effectué sous air ou sous atmosphère inerte (azote par exemple) de préférence à une température comprise entre 50°C et 250°C, de manière plus préférée entre 70°C et 200°C.

Selon ladite étape g) du procédé de préparation du catalyseur selon l'invention, on procède à la calcination sous air du solide séché issu de ladite étape f). La température de calcination est généralement comprise entre 250°C et 900°C, de préférence comprise entre environ 300°C et 500°C. La durée de calcination est généralement comprise entre 0,5 heures et 5 heures.

Le catalyseur calciné obtenu à l'issue de ladite étape g) est soumis à une étape h) de réduction à une température comprise entre 50°C et 500°C, de manière préférée entre 80°C et 180°C. La réduction est réalisée en présence d'un gaz réducteur comprenant entre 25 vol% et 100 vol% d'hydrogène, de préférence 100% volume d'hydrogène. L'hydrogène est éventuellement complété par un gaz inerte pour la réduction, de préférence de l'argon, de l'azote ou du méthane. La durée de la réduction est généralement comprise entre 1 et 15 heures, de préférence entre 2 et 8 heures. La vitesse volumique horaire (WH) est généralement comprise entre 150 et 1000, de préférence entre 300 et 900 litres de gaz réducteur par heure et par litre de catalyseur.

Lorsque le catalyseur comprend, en plus d'au moins un métal du groupe VIII, au moins un métal additionnel du groupe IB, on procède à la suite de ladite étape f) à une étape e') d'imprégnation dudit solide issu de ladite étape f) par au moins une solution d'au moins un précurseur d'au moins un métal du groupe IB. Ladite étape e') est réalisée dans les mêmes conditions opératoires que celles de ladite étape e). De manière préférée, ladite solution dudit précurseur est une solution aqueuse et le sel précurseur dudit métal du groupe IB est généralement choisi dans groupe constitué par les chlorures, les nitrates et les sulfates d'ions métalliques. Lorsque de manière préférée, le métal est l'or ou l'argent, les sel précurseurs sont l'acide chloraurique ou le nitrate d'argent respectivement.

Cette étape d'imprégnation est suivie du séchage du solide imprégné par au moins un métal du groupe IB dans les mêmes conditions que celles de l'étape f). Puis ledit solide est soumis à ladite étape g) de calcination.

La présente invention a également pour objet un procédé d'hydrogénation sélective comprenant la mise en contact d'une charge hydrocarbonée contenant au moins un composé poly-insaturé avec au moins ledit catalyseur préparé selon le procédé décrit ci-dessus dans la présente description.
Ladite charge hydrocarbonée contenant au moins un composé poly-insaturé est avantageusement choisie dans le groupe constitué par les coupes issues du craquage catalytique, la coupe C3 issue du vapocraquage, la coupe C4 issue du vapocraquage, la coupe C5 issue du vapocraquage et les essences issues du vapocraquage appelées aussi essences de pyrolyse. Lesdites coupes contiennent des composés comportant des fonctions acétyléniques, diéniques et/ou oléfiniques.

La mise en oeuvre du catalyseur préparé selon le procédé de l'invention décrit ci-dessus dans la présente description et les conditions de son utilisation dans le procédé d'hydrogénation sélective sont à adapter par l'utilisateur à la technologie utilisée d'une manière connue de l'Homme du métier.

Les procédés de conversion des hydrocarbures tels que le vapocraquage ou le craquage catalytique sont opérés à haute température et produisent une grande variété de molécules insaturées telles que l'éthylène, le propylène, les butènes linéaires, l'isobutène, les pentènes ainsi que des molécules insaturées contenant jusqu'à environ 15 atomes de carbone. Des composés polyinsaturés sont également formés et en particulier l'acétylène, le propadiène et le méthylacétylène (ou propyne), les 1-2 et 1-3 butadiène, le vinylacétylène et l'éthylacétylène ainsi que d'autres composés polyinsaturés dont le point d'ébullition correspond à la fraction essence C5+. L'ensemble de ces composés polyinsaturés doivent être éliminés pour permettre l'utilisation des différentes coupes dans lesquelles ils sont contenus dans des procédés de pétrochimie tels que les unités de polymérisation.

Ainsi, par exemple, la coupe C3 issue du vapocraquage peut avoir la composition moyenne suivante : de l'ordre de 90% poids de propylène, de l'ordre de 3 à 8% poids de propadiène et méthylacétylène, le reste étant essentiellement du propane. Dans certaines coupes C3, entre 0,1 et 2% poids de composés en C2 et en C4 peu(ven)t aussi être présent(s). Les spécifications concernant les concentrations de ces composés polyinsaturés pour les unités de pétrochimie et de polymérisation sont très basses : 20-30 ppm poids de MAPD (MéthylAcétylène et PropaDiène) pour le propylène lorsqu'il est prévu d'employer une coupe C3 dans une unité de pétrochimie et moins de 10 ppm poids voire jusqu'à 1 ppm poids lorsqu'il est prévu d'employer une coupe C3 dans une unité de polymérisation.
Une coupe C4 issue du vapocraquage présente par exemple la composition molaire moyenne suivante : 1 % de butane, 46,5% de butène, 51% de butadiène, 1,3% de VinylAcetylène (VAC) et 0,2% de butyne. Dans certaines coupes C4, entre 0,1 et 2% poids de composés en C3 et en C5 peu(ven)t aussi être présent(s). Les spécifications concernant les concentrations des composés polyinsaturés sont sévères : teneur en dioléfines strictement inférieure à 10 ppm poids pour une coupe C4 utilisée dans une unité de pétrochimie ou de polymérisation.
Une coupe C5 issue du vapocraquage présente par exemple la composition moyenne en masse suivante : 21 % de pentanes, 45% de pentènes, 34% de pentadiènes.

Le procédé d'hydrogénation sélective selon l'invention permet d'éliminer les composés polyinsaturés des coupes pétrolières C3 à C5 citées ci-dessus par la conversion des composés les plus insaturés vers les alcènes correspondants en évitant la saturation totale et donc la formation des alcanes correspondants.

L'hydrogénation sélective des coupes C3, C4 et C5 peut être réalisée en phase gaz ou en phase liquide, de préférence en phase liquide. En effet, une réaction en phase liquide permet d'abaisser le coût énergétique et d'augmenter la durée de cycle du catalyseur.
Pour une réaction en phase liquide, la pression est généralement comprise entre 1 et 3 MPa, la température entre 2 et 50°C et le ratio molaire hydrogène/(composés polyinsaturés à hydrogéner) entre 0,1 et 4, de préférence entre 1 et 2. La VVH (débit de charge par volume de catalyseur) est comprise entre 10 et 50 h⁻¹.

Pour une réaction d'hydrogénation en phase gazeuse, la pression est généralement comprise entre 1 et 3 MPa, la température entre 40 et 120°C, le ratio molaire hydrogène/(composés polyinsaturés à hydrogéner) entre 0,1 et 4, de préférence entre 1 et 2 et la VVH (débit de charge par volume de catalyseur) est comprise entre 500 h⁻¹ et 5000 h⁻¹.

Selon un mode préféré de mise en oeuvre du procédé d'hydrogénation sélective selon l'invention, la charge hydrocarbonée contenant au moins un composé poly-insaturé et mise en contact avec le catalyseur préparé selon le procédé de l'invention est une essence issue du vapocraquage. Une telle essence est appelée essence de pyrolyse. L'essence de pyrolyse correspond à une coupe dont la température d'ébullition est généralement comprise entre 0°C et 250°C, de préférence entre 10°C et 220°C. Cette charge comprend généralement la coupe C5-C12 avec des traces de composés en C3, C4, C13, C14, C15 (par exemple entre 0,1 et 3% poids pour chacune de ces coupes).

Par exemple, une charge formée d'essence de pyrolyse a généralement une composition en % poids suivante: 8 à 12 % poids de paraffines, 58 à 62 % poids de composés aromatiques, 8 à 10% poids de mono-oléfines, 18 à 22 % poids de dioléfines et de 20 à 300 ppm de soufre.

Dans le cas d'une hydrogénation sélective d'essence de pyrolyse, le ratio molaire hydrogène/(composés polyinsaturés à hydrogéner) est généralement compris entre 1 et 2, la température est généralement comprise entre 40°C et 200°C, de préférence entre 50 et 180°C, la vitesse horaire spatiale (correspondant au volume d'hydrocarbure par volume de catalyseur et par heure) est comprise généralement entre 0,5 h⁻¹ et 10 h⁻¹, de préférence entre 1 h⁻¹ et 5 h⁻¹ et la pression est généralement comprise entre 1,0 MPa et 6,5 MPa, de préférence entre 2,0 MPa et 3,5 MPa. Le débit d'hydrogène est ajusté afin d'en disposer en quantité suffisante pour hydrogéner théoriquement l'ensemble des dioléfines, des acétyléniques et des alkényl aromatiques et de maintenir un excès d'hydrogène en sortie de réacteur. Afin de limiter le gradient de température dans le réacteur, il peut être avantageux de recycler une fraction de l'effluent à l'entrée et/ou au milieu du réacteur.

Les exemples qui suivent illustrent l'invention sans en limiter la portée. Le test d'attrition réalisé sur les matériaux préparés dans les exemples 1 à 5 suivants a été effectué dans les conditions décrites plus haut dans la présente description au moyen de la méthode Spence en employant un tamis normalisé NFX-11-504/ISO-3310-2 ayant un diamètre d'ouverture de 1 mm.

### Exemple 1 (invention) : préparation d'un matériau coeur-couche

Cet exemple décrit la préparation d'un matériau contenant un coeur en alumine alpha et une couche en alumine gamma. La couche est formée sur une pré-couche à partir d'une poudre formée de particules sphériques de distribution de taille calibrée, d'une suspension aqueuse contenant un liant organique et un liant inorganique avec adjonction d'air chaud. La pré-couche est formée à partir de la même suspension que la couche.

Le coeur est préparé à partir de particules sphériques en alumine gamma référencées Sphéralite 537 (Axens). Ces billes sont calcinées à 1200°C de manière à être transformées en alumine alpha et présenter une surface spécifique de 9 m²/g, un volume poreux total de 0,28 ml/g et une taille moyenne de pores de 90 nm d'après l'analyse par physisorption d'azote (ASAP2420, Micromeretics). L'analyse MEB (Supra, Zeiss) montre des particules parfaitement sphériques dont le plus petit diamètre est égal à 1,45 mm, le plus grand diamètre est égal à 1,75 mm et le diamètre moyen est égal à 1,6 mm.

La pré-couche est directement formée sur le coeur à partir d'une suspension aqueuse de boehmite peptisée dans l'acide nitrique contenant de l'alcool polyvynilique. La suspension est préparée par dispersion de boehmite commerciale référencée Pural SB3 (Sasol) dans une solution d'acide nitrique de manière à obtenir un rapport massique HNO3/AlOOH de 3,35 % et un rapport massique de AlOOH/(AlOOH+H₂O) de 3 %. Le mélange est agité, à température ambiante pendant 2 h. La suspension est centrifugée à 3800 g pendant 20 min pour extraire toute boehmite non peptisée. L'alcool polyvynilique (Carlo Erba) est dissout dans la suspension de manière à obtenir un rapport massique PVA/AlOOH de 3 %. Le dépôt de la suspension sur les particules d'alumine alpha est réalisé dans un drageoir de laboratoire (Grelbex P30) équipé d'un plateau cylindro-conique avec un mouvement de type cascade du lit de billes constituant le coeur. Pour cela, 100 g de particule d'alumine alpha sont placés dans le plateau incliné à 30° et mis en rotation à 40 tr/min et 28 ml de suspension sont pulvérisés à un débit moyen de 1 ml/min sur lesdites particules conduisant à un rapport massique AlOOH/α Al₂O₃ de 0,86 %.

La couche est ensuite directement formée sur la pré-couche autour du coeur à partir d'une poudre d'alumine gamma et d'une suspension aqueuse de boehmite peptisée dans l'acide nitrique contenant l'alcool polyvynilique, identique à celle préparée pour la précouche. La poudre d'alumine gamma est préparée par séchage par atomisation d'une suspension aqueuse contenant une boehmite (Pural SB3, Sasol), de l'acide nitrique et du nitrate d'aluminium puis par calcination. Les particules d'alumine gamma formant la poudre sont sphériques d'après l'analyse MEB. Les tailles caractéristiques mesurées par granulométrie à diffraction laser (Mastersizer 2000, Malvern) sont : Dv50=2 µm, Dv10=1 µm et Dv90=3 µm. La poudre présente une surface spécifique de 223 m²/g, un volume poreux de 0,35 ml/g et une taille médiane de pores de 7 nm, d'après l'analyse par physisorption à l'azote. Le dépôt de la couche sur les particules d'alumine alpha munies d'une pré-couche est réalisé dans le même drageoir avec un mouvement en cascade du lit de particules contenant la pré-couche. 6 g de poudre d'alumine gamma sont introduites progressivement à un débit moyen de 0,13 ml/min sur les particules contenant la pré-couche conduisant à un rapport massique γAl₂O₃/αAl₂O₃ de 6 %. 61 ml de suspension sont simultanément pulvérisés à un débit moyen de 1 ml/g sur les particules contenant la pré-couche conduisant à un rapport masse/volume AlOOH/γAl₂O₃ de 0,24 g/ml. Le rapport massique PVA/AlOOH est identique à celui pour l'étape de formation de la pré-couche et est égale à 3%. Un flux d'air continu à 70°C est simultanément appliqué sur le lit de particules sphériques munies de la pré-couche.

Le matériau obtenu après le dépôt de la couche est séché en étuve ventilée à 100°C, pendant 2 h sous air ambiant puis calciné en four à moufle à 600°C pendant 2 h sous air ambiant.

L'analyse MEB (Supra, Zeiss) du matériau sur section polie montre une couche continue, d'épaisseur homogène variant de 18 µm à 22 µm, de valeur moyenne de 20 µm. L'analyse MEB du matériau sur section polie montre également que les particules d'alumine gamma formant la poudre sont très proches voire jointives et que les vides interparticulaires sont remplis par le liant inorganique, sans porosité résiduelle, défaut de type craquelure ou fissure. Le liant inorganique est constitué d'alumine gamma résultant de la conversion de la boehmite suite à l'étape de calcination. L'analyse MEB de la pré-couche, réalisée après la mise en oeuvre de l'étape d) de calcination sans mise en oeuvre de l'étape b) de formation de la couche enrobant le coeur, montre une épaisseur sur la surface externe de 1 µm et une profondeur de 1,5 µm. Le taux d'attrition du matériau est très faible, égal à 2,7 %, et est minimal pour cette quantité de boehmite introduite. La résistance à l'attrition est donc très élevée et satisfaisante.

### Exemple 2 (invention) : préparation d'un matériau coeur-couche

Cet exemple décrit la préparation d'un matériau contenant un coeur en alumine alpha et une couche en alumine gamma. La couche est formée à partir d'une poudre de particules sphériques de distribution de taille calibrée, d'une suspension aqueuse contenant un liant organique et un liant inorganique avec adjonction d'air chaud. La pré-couche est formée à partir de la même suspension que la couche sans l'ajout de liant organique.

Les conditions de préparation, le protocole opératoire et les réactifs utilisés sont identiques à celles et ceux de l'exemple 1, mais sans l'ajout d'alcool polyvynilique dans la suspension destinée à la formation de la pré-couche.

L'analyse MEB (Supra, Zeiss) du matériau sur section polie montre une couche continue, d'épaisseur homogène variant de 17 µm à 23 µm. L'analyse MEB du matériau sur section polie montre également que les particules d'alumine gamma formant la poudre sont très proches voire jointives et que les vides interparticulaires sont remplis par le liant inorganique constitué d'alumine gamma suite à l'étape de calcination, sans porosité résiduelle, défaut de type craquelure ou fissure. L'analyse MEB de la pré-couche, réalisée après la mise en oeuvre de l'étape d) de calcination sans mise en oeuvre de l'étape b) de formation de la couche enrobant le coeur, sur section polie montre une épaisseur sur la surface externe de 1 µm et une profondeur de 1 µm. Le taux d'attrition du matériau est très faible et est égal à 3,5 %. La résistance à l'attrition est donc très élevée et satisfaisante.

### Exemple 3 (comparatif) : préparation d'un bimatériau coeur-couche dépourvu de pré-couche.

Cet exemple décrit la préparation d'un matériau contenant un coeur en alumine alpha et une couche en alumine gamma. Ledit matériau est dépourvu de pré-couche. La couche est formée à partir d'une poudre de particules sphériques de distribution de taille calibrée, d'une suspension aqueuse contenant un liant organique et un liant inorganique sous adjonction d'air chaud.

Les conditions de préparation, le protocole opératoire et les réactifs utilisés sont identiques à celles et ceux de l'exemple 1, mais sans l'étape de formation de pré-couche.

L'analyse MEB (Supra Zeiss) du matériau sur section polie montre à certains endroits une couche fragmentée, non continue et non homogène en épaisseur et à d'autres endroits elle montre des particules d'alumine gamma formant la poudre proches les unes des autres et dont les vides interparticulaires sont remplis par le liant inorganique, sans porosité résiduelle, mais de nombreux défauts de type craquelure et fissure à l'interface couche-coeur conduisant à la fragmentation. Le taux d'attrition du matériau est très élevé et est égal à 90 %. La résistance à l'attrition est donc extrêmement faible et non satisfaisante.

### Exemple 4 (comparatif) : préparation d'un matériau coeur-couche pour lequel la couche est constituée de particules non sphériques

Cet exemple décrit la préparation d'un matériau contenant un coeur en alumine alpha et une couche en alumine gamma. La couche est formée sur une pré-couche à partir d'une poudre formée de particules non sphériques de distribution de taille calibrée, d'une suspension aqueuse contenant un liant organique et un liant inorganique avec adjonction d'air chaud. La pré-couche est formée à partir de la même suspension que la couche.

Les conditions de préparation, le protocole opératoire et les réactifs utilisés sont identiques à celles et ceux de l'exemple 1, mais avec l'utilisation d'une poudre formée de particules d'alumine gamma non sphériques et un volume de suspension de boehmite pulvérisée légèrement plus élevé dans l'étape b) de formation de la couche enrobant le coeur pour remplir les vides interparticulaires formés par les particules de la poudre.

La poudre d'alumine gamma est préparée par broyage à jet d'air de la poudre référencée Puralox (Sasol). Les particules sont de forme très variable, issue de fragmentation, d'après l'analyse MEB. Les tailles caractéristiques mesurées par granulométrie à diffraction laser (Mastersizer 2000, Malvern) sont : Dv50=2 µm, Dv10=1 µm et Dv90=4 µm. La poudre présente une surface spécifique de 210 m²/g, un volume poreux de 0,35 ml/g et un taille médiane de pores de 8 nm, d'après l'analyse par physisorption à l'azote (ASAP2420, Micromeretics). Le volume de la suspension de boehmite de 70 ml est pulvérisé progressivement à un débit moyen de 1,15 ml/min et conduit à un rapport masse/volume AlOOH/γAl₂O₃ de 0,27 g/mL.

L'analyse MEB (Supra, Zeiss) du matériau sur section polie montre à certains endroits une couche légèrement fragmentée, discontinue et peu homogène en épaisseur et à d'autres endroits elle montre des particules d'alumine gamma formant la poudre relativement proches les unes des autres et dont les vides interparticulaires sont remplis par le liant inorganique, mais de nombreux défauts de type craquelure et fissure sont présents dans le liant conduisant à la fragmentation observée. Le taux d'attrition du matériau est de 20 %. La résistance à l'attrition est donc faible et non satisfaisante.

### Exemple 5 (comparatif) : préparation d'un matériau coeur-couche

Cet exemple décrit la préparation d'un matériau contenant un coeur en alumine alpha et une couche en alumine gamma. La couche est formée sur une pré-couche à partir d'une poudre de particules sphériques de distribution de taille calibrée, d'une suspension aqueuse contenant un liant organique et un liant inorganique avec adjonction d'air chaud. La pré-couche est formée à partir de la même suspension que la couche.

Les conditions de préparation, le protocole opératoire et les réactifs utilisés sont identiques à celles et ceux de l'exemple 1 mais avec un volume de suspension de boehmite très élevé pour la formation de la couche enrobant le coeur, ne satisfaisant pas le rapport masse/volume AlOOH/αAl₂O₃ préconiséedans l'invention.

Le volume de la suspension de boehmite de 331 ml est pulvérisé progressivement à un débit moyen de 5,43 mL/min et conduit à un rapport masse/volume AlOOH/γAl₂O₃ de 1,3 g/mL.

L'analyse MEB du matériau montre une couche totalement fragmentée, discontinue et inhomogène en épaisseur ainsi que des particules d'alumine gamma formant la poudre relativement éloignées les unes des autres et un liant inorganique comprenant de très nombreux défauts de type craquelure et fissure conduisant à la totale fragmentation. Le taux d'attrition du matériau est de 95 %. La résistance à l'attrition est donc extrêmement faible et non satisfaisante.

### Exemple 6 (invention) : préparation d'un catalyseur A

25 g de matériau préparé selon l'exemple 1 sont imprégnés à sec dans un drageoir à 25°C par une solution aqueuse de nitrate de palladium Pd(NO₃)₂. Ladite solution est préparée par dilution de 0,54 g d'une solution aqueuse de nitrate de palladium à 10% poids et 10% poids d'acide nitrique (Aldrich) dans de l'eau déminéralisée à un volume total qui correspond au volume poreux dudit matériau. Il n'est pas observé d'attrition dudit matériau lors de l'étape d'imprégnation.
Le catalyseur A obtenu est séché sous air à 120°C, puis est calciné pendant 2 heures à 450°C sous air. Le catalyseur A contient 0,1 % poids de palladium déposé dans la porosité de la couche du matériau préparé selon l'exemple 1.

### Exemple 7 (comparatif) : préparation d'un catalyseur B

25 g de matériau préparé selon l'exemple 3 sont imprégnés à sec dans un drageoir à 25°C par une solution aqueuse de nitrate de palladium Pd(NO₃)₂. Ladite solution est préparée par dilution de 0,54 g d'une solution aqueuse de nitrate de palladium à 10% poids et 10% poids d'acide nitrique (Aldrich) dans de l'eau déminéralisée à un volume total qui correspond au volume poreux dudit matériau. Lors de l'étape d'imprégnation, le matériau subit de l'attrition.

La quantité de fines générée est pesée et estimée à environ 60% de la masse de la couche présente initialement dans ledit matériau.
Le catalyseur B obtenu est séché sous air à 120°C, puis est calciné pendant 2 heures à 450°C sous air. Le catalyseur B contient 0,1 % poids de palladium déposé dans la porosité de la couche du matériau préparé selon l'exemple 3.

### Exemple 8 (comparatif) : préparation d'un catalyseur C

25 g de matériau préparé selon l'exemple 4 sont imprégnés à sac dans un drageoir à 25°C par une solution aqueuse de nitrate de palladium Pd(NO3)₂. Ladite solution est préparée par dilution de 0,54 g d'une solution aqueuse de nitrate de palladium à 10% poids et 10% poids d'acide nitrique (Aldrich) dans de l'eau déminéralisée à un volume total qui correspond au volume poreux du matériau. Il n'est pas observé d'attrition du matériau lors de l'étape d'imprégnation.
Le catalyseur C obtenu est séché sous air à 120°C, puis est calciné pendant 2 heures à 450°C sous air. Le catalyseur C contient 0,1 % poids de palladium déposé dans la porosité de la couche du matériau préparé selon l'exemple 4.

### Exemple 9 : Test catalytique en hydrogénation sélective d'un mélange styrène isoprène

Avant le test catalytique, les catalyseurs A, B et C sont traités sous un flux de 1000 litre d'hydrogène par heure et par litre de catalyseur avec une montée en température de 300°C/h et un palier à 150°C pendant 2 heures.

Les catalyseurs sont ensuite successivement soumis à un test d'hydrogénation dans un réacteur discontinu parfaitement agité de type « Grignard ». Pour ce faire, 2 ml de billes de catalyseur réduit sont fixées à l'abri de l'air dans un panier annulaire situé autour du mobile d'agitation. Les paniers utilisés dans les réacteurs sont de type Robinson Mahonnay.
L'hydrogénation est réalisée en phase liquide.
La composition de la charge est la suivante : 8% poids styrène, 8% poids isoprène, le solvant étant du n-heptane. Cette charge est une charge modèle d'essence de pyrolyse.
Le test est réalisé sous une pression constante de 3,5 MPa d'hydrogène et à une température de 45 °C. Les produits de la réaction sont analysés par chromatographie en phase gazeuse.

Les activités catalytiques sont exprimées en moles de H₂ consommées par minute et par gramme de palladium et sont reportées dans le tableau 1.

**Tableau 1: Activités mesurées en hydrogénation d'un mélange styrène-isoprène**

| Catalyseur | Activité* |
|---|---|
| Catalyseur A (invention) | 8,06 |
| Catalyseur B (comparatif) | 1,33 |
| Catalyseur C (comparatif) | 3,76 |

| | |
|---|---|
| * en (moles H₂)/[min×(gramme de palladium)] | |

Le catalyseur A préparé à partir du matériau coeur-couche présentant un faible taux d'attrition et ayant une couche continue et d'épaisseur homogène, préparé conformément au procédé de préparation de l'invention, est nettement plus actif que le catalyseur B préparé à partir d'un matériau coeur-couche ayant une résistance à l'attrition extrêmement faible et présentant une couche non continue et non homogène en épaisseur. Ce même catalyseur A est également sensiblement plus actif que le catalyseur C préparé à partir d'un matériau coeur-couche ayant une résistance à l'attrition faible et présentant une couche non continue et non homogène en épaisseur.

## Revendications

1. Procédé de préparation d'un matériau sphérique comprenant au moins un coeur poreux enrobé par au moins une couche poreuse continue et homogène, le taux d'attrition dudit matériau étant inférieur à 20%, ledit procédé de préparation comprenant au moins les étapes suivantes :
a) la mise en contact d'au moins un lit de particules sphériques constituant le coeur dudit matériau avec au moins une suspension contenant au moins un liant inorganique de manière à former un solide ayant une pré-couche autour dudit coeur par ladite mise en contact,
b) la mise en contact sous flux d'air chaud du solide issu de ladite étape a) avec au moins une poudre constituée de particules sphériques d'au moins un oxyde inorganique et au moins une suspension contenant au moins un liant inorganique et au moins un liant organique de manière à former un solide dont le coeur est enrobé par au moins une couche poreuse continue et homogène par ladite mise en contact sous flux d'air chaud, le rapport masse de liant inorganique anhydre/volume de particules de poudre étant compris entre 0,05 et 1 g.ml⁻¹,
c) le séchage du solide issu de ladite étape b),
d) la calcination du solide issu de ladite étape c).

2. Procédé de préparation selon la revendication 1 tel que le coeur est constitué d'une alumine alpha et la couche d'une alumine gamma.

3. Procédé de préparation selon la revendication 1 ou la revendication 2 tel que l'épaisseur de la couche présente une valeur moyenne comprise entre 0,005 et 1 mm.

4. Procédé de préparation selon l'une des revendications 1 à 3 tel que ledit matériau présente un taux d'attrition inférieur à 5%.

5. Procédé de préparation selon l'une des revendications 1 à 4 tel que la suspension utilisée pour la mise en oeuvre de ladite étape a) contient au moins un liant organique.

6. Procédé de préparation selon l'une des revendications 1 à 5 tel que ladite étape a) est opérée en l'absence de tout débit d'air.

7. Procédé de préparation selon l'une des revendications 1 à 6 tel que ladite étape a) est réalisée par pulvérisation de ladite suspension sur ledit lit de particules sphériques contenu dans un plateau tournant incliné ou dans un tambour tournant et fonctionnant selon un mouvement de type cascade.

8. Procédé de préparation selon l'une des revendications 1 à 7 tel que le rapport masse de liant inorganique anhydre/volume de particules de poudre dans ladite étape b) est compris entre 0,15 et 0,35 g.ml⁻¹.

9. Procédé de préparation selon l'une des revendications 1 à 8 tel que la température du flux d'air chaud au cours de ladite étape b) est comprise entre 60 et 150°C.

10. Procédé de préparation d'un catalyseur comprenant au moins les étapes suivantes :
e) l'imprégnation du matériau préparé selon le procédé de l'une des revendications 1 à 9 par au moins une solution d'au moins un précurseur d'au moins un métal du groupe VIII,
f) le séchage du solide issu de ladite étape e),
g) la calcination du solide issu de ladite étape f), et
h) la réduction du catalyseur issu de ladite g).

11. Procédé de préparation d'un catalyseur selon la revendication 10 tel que ledit métal du groupe VIII est le palladium.

12. Procédé de préparation d'un catalyseur selon la revendication 10 ou la revendication 11 tel qu'on procède, à la suite de ladite f), à une étape e') d'imprégnation dudit solide issu de ladite étape f) par au moins une solution d'au moins un précurseur d'au moins un métal du groupe IB.

13. Procédé d'hydrogénation sélective comprenant la mise en contact d'une charge hydrocarbonée contenant au moins un composé poly-insaturé avec au moins un catalyseur préparé selon le procédé de préparation selon l'une des revendications 10 à 12.

14. Procédé d'hydrogénation sélective selon la revendication 13 tel que ladite charge hydrocarbonée est choisie dans le groupe constitué par les coupes issues du craquage catalytique, la coupe C3 issue du vapocraquage, la coupe C4 issue du vapocraquage, la coupe C5 issue du vapocraquage et les essences issues du vapocraquage.

## Claims

1. A process for preparing a spherical material comprising at least one porous core coated with at least one continuous and homogeneous porous layer, the degree of attrition of said material, measured using the Spence method, being less than 20%, said preparation process comprising at least the following steps:
a) bringing at least one bed of spherical particles constituting the core of said material into contact with at least one suspension containing at least one inorganic binder in order to form a solid having a pre-layer surrounding said core via said contact;
b) bringing the solid derived from said step a) into contact in a stream of hot air with at least one powder constituted by spherical particles of at least one inorganic oxide and at least one suspension containing at least one inorganic binder and at least one organic binder in order to form a solid the core of which is coated with at least one continuous and homogeneous porous layer via said contact in a stream of hot air, the ratio of the (mass of anhydrous inorganic binder/volume of powder particles) being in the range 0.05 to 1 g.mL⁻¹;
c) drying the solid derived from said step b);
d) calcining the solid derived from said step c).

2. A preparation process according to claim 1, wherein the core is constituted by an alpha alumina and the layer by a gamma alumina.

3. A preparation process according to claim 1 or claim 2, wherein the thickness of the layer has a mean value in the range 0.005 to 1 mm.

4. A preparation process according to one of claims 1 to 3, wherein said material has a degree of attrition of less than 5%.

5. A preparation process according to one of claims 1 to 4, wherein the suspension used to carry out said step a) contains at least one organic binder.

6. A preparation process according to one of claims 1 to 5, wherein said step a) is carried out in the absence of any flow of air.

7. A preparation process according to one of claims 1 to 6, wherein said step a) is carried out by spraying said suspension onto said bed of spherical particles contained in an inclined rotating plate or in a rotating drum and executing a cascade type movement.

8. A preparation process according to one of claims 1 to 7, wherein the ratio of the (mass of anhydrous inorganic binder/volume of particles of powder) ratio in said step b) is in the range 0.15 to 0.35 g.mL⁻¹.

9. A preparation process according to one of claims 1 to 8, wherein the temperature of the hot air stream during said step b) is in the range 60°C to 150°C.

10. A process for preparing a catalyst, comprising at least the following steps:
e) impregnating material prepared in accordance with one of claims 1 to 9 with at least one solution of at least one precursor of at least one metal from group VIII;
f) drying the solid derived from said step e);
g) calcining the solid derived from said step f); and
h) reducing the catalyst derived from said step g).

11. A process for the preparation of a catalyst according to claim 10, wherein said metal from group VIII is palladium.

12. A process for the preparation of a catalyst according to claim 10 or claim 11 wherein, following said step f) a step e') for impregnation of said solid derived from said step f) is carried out with at least one solution of at least one precursor of at least one metal from group IB.

13. A process for selective hydrogenation comprising bringing a hydrocarbon feed containing at least one polyunsaturated compound into contact with at least one catalyst prepared using the preparation process according to one of claims 10 to 12.

14. A selective hydrogenation process according to claim 13, wherein said hydrocarbon feed is selected from the group constituted by cuts derived from catalytic cracking, the C3 cut derived from steam cracking, the C4 cut derived from steam cracking, the C5 cut derived from steam cracking and gasolines derived from steam cracking.

## Patentansprüche

1. Verfahren zum Herstellen eines kugelförmigen Materials, umfassend mindestens einen porösen Kern, der mit mindestens einer kontinuierlichen und homogenen porösen Schicht umhüllt ist, wobei der Abriebgrad des Materials unterhalb von 20 % liegt, wobei das Herstellungsverfahren mindestens die folgenden Schritte umfasst:
a) Inkontaktbringen mindestens eines Betts aus kugelförmigen Partikeln, die den Kern des Materials darstellen, mit mindestens einer Suspension, die mindestens ein anorganisches Bindemittel enthält, um einen Feststoff zu bilden, der durch das Inkontaktbringen eine den Kern umgebende Vorschicht aufweist,
b) Inkontaktbringen unter Warmluftstrom des Feststoffs aus dem Schritt a) mit mindestens einem Pulver, das aus kugelförmigen Partikeln besteht, mit mindestens einem anorganischen Oxid und mindestens einer Suspension, die mindestens ein anorganisches Bindemittel und mindestens ein organisches Bindemittel enthält, um einen Feststoff zu bilden, dessen Kern durch das Inkontaktbringen unter Warmluftstrom mit mindestens einer kontinuierlichen und homogenen porösen Schicht umhüllt ist, wobei das Verhältnis Masse an wasserfreiem anorganischem Bindemittel/Volumen der Pulverpartikel im Bereich zwischen 0,05 und 1 g.ml⁻¹ liegt,
c) Trocknen des Feststoffs aus dem Schritt b),
d) Kalzinieren des Feststoffs aus dem Schritt c).

2. Herstellungsverfahren nach Anspruch 1, wobei der Kern aus einem alpha-Aluminiumoxid und die Schicht aus einem gamma-Aluminiumoxid besteht.

3. Herstellungsverfahren nach Anspruch 1 oder Anspruch 2, wobei die Dicke der Schicht einen Mittelwert im Bereich zwischen 0,005 und 1 mm aufweist.

4. Herstellungsverfahren nach einem der Ansprüche 1 bis 3, wobei das Material einen Abriebgrad unterhalb von 5 % aufweist.

5. Herstellungsverfahren nach einem der Ansprüche 1 bis 4, wobei die Suspension, die zur Durchführung des Schritts a) verwendet wird, mindestens ein organisches Bindemittel enthält.

6. Herstellungsverfahren nach einem der Ansprüche 1 bis 5, wobei der Schritt a) in Abwesenheit jedes Luftstroms ausgeführt wird.

7. Herstellungsverfahren nach einem der Ansprüche 1 bis 6, wobei der Schritt a) durch Zerstäuben der Suspension auf dem Bett aus kugelförmigen Partikeln realisiert wird, das in einem geneigten Drehteller oder in einer Drehtrommel enthalten ist und in einer kaskadenartigen Bewegung arbeitet.

8. Herstellungsverfahren nach einem der Ansprüche 1 bis 7, wobei das Verhältnis Masse an wasserfreiem anorganischem Bindemittel/Volumen der Pulverpartikel in dem Schritt b) im Bereich zwischen 0,15 und 0,35 g.ml⁻¹ liegt.

9. Herstellungsverfahren nach einem der Ansprüche 1 bis 8, wobei die Temperatur des Heißluftstroms im Verlauf des Schritts b) im Bereich zwischen 60 und 150 °C liegt.

10. Verfahren zur Herstellung eines Katalysators, umfassend mindestens die folgenden Schritte:
e) Imprägnieren des nach dem Verfahren aus einem der Ansprüche 1 bis 9 hergestellten Materials mit mindestens einer Lösung aus mindestens einem Vorläufer mindestens eines Metalls der Gruppe VIII,
f) Trocknen des Feststoffs aus dem Schritt e),
g) Kalzinieren des Feststoffs aus dem Schritt f), und
h) Reduzieren des Katalysators aus dem Schritt g).

11. Verfahren zur Herstellung eines Katalysators nach Anspruch 10, wobei das Metall der Gruppe VIII Palladium ist.

12. Verfahren zur Herstellung eines Katalysators nach Anspruch 10 oder Anspruch 11, wobei nach Schritt f) ein Schritt e') zum Imprägnieren des Feststoffs aus dem Schritt f) mit mindestens einer Lösung aus mindestens einem Vorläufer mindestens eines Metalls der Gruppe IB erfolgt.

13. Verfahren zum selektiven Hydrieren, umfassend das Inkontaktbringen einer Kohlenwasserstoffbeschickung, die mindestens eine mehrfach ungesättigte Verbindung enthält, mit mindestens einem Katalysator, der nach dem Herstellungsverfahren nach einem der Ansprüche 10 bis 12 hergestellt wurde.

14. Verfahren zum selektiven Hydrieren nach Anspruch 13, wobei die Kohlenwasserstoffbeschickung ausgewählt ist aus der Gruppe bestehend aus den Schnitten aus dem katalytischen Cracken, dem Schnitt C3 aus dem Dampfcracken, dem Schnitt C4 aus dem Dampfcracken, dem Schnitt C5 aus dem Dampfcracken und den Benzinen aus dem Dampfcracken.
